# EUROPEAN PATENT APPLICATION

(11) **EP 4 351 158 A1**
(43) Date of publication of application: **10.04.2024**
(21) Application number: 23751242.1
(22) Date of filing: 02.06.2023
(51) Int. Cl.: H04N 23/55, H04N 23/54, H04N 23/53, G03B 17/12, G02B 7/02

(54) **CAMERA COMPRISING LENSES AND ELECTRONIC DEVICE INCLUDING SAME**

(30) Priority: 19.08.2022 KR 20220103883; 20.09.2022 KR 20220118309
(71) Applicant: Samsung Electronics Co., Ltd., Suwon-si, Gyeonggi-do 16677 (KR)
(72) Inventor: LEE, Kyeongeun, Suwon-si, Gyeonggi-do 16677 (KR); PARK, Cheongsoo, Suwon-si, Gyeonggi-do 16677 (KR)
(74) Representative: Nederlandsch Octrooibureau
(86) International application number: PCT/KR2023/007576
(87) International publication number: WO 2024/039016

(57) **Abstract**

A camera includes a plurality of lenses, a lens housing, and an image sensor. The plurality of lenses may include an effective region and a non-effective region. A first lens may include a first protrusion protruding in an optical axis direction. The first protrusion may face a non-effective region of a second lens.

## Description

### TECHNICAL FIELD

The disclosure generally relates to a camera and an electronic device including the same, for example, to a camera with lenses and an electronic device including the same.

### BACKGROUND ART

The camera may include a lens barrel configured to accommodate at least one lens. The camera may be disposed in the electronic device such that the exterior of the lens barrel does not interfere with other mechanical components (e.g., a housing structure, a display structure, and/or other mechanical components) of the electronic device. The above description is information acquired during the course of conceiving the disclosure, or already possessed at the time, and is not necessarily art publicly known before the present application was filed.

### DISCLOSURE OF INVENTION

### TECHNICAL SOLUTIONS

According to an embodiment, a camera includes a plurality of lenses arranged in an optical axis direction. The camera may include a lens housing configured to accommodate the plurality of lenses. The camera may include an image sensor including an imaging area. The imaging area may include a first periphery having a first length and a second periphery having a second length greater than the first length. The plurality of lenses may include an effective region through which light passes and a non-effective region through which light does not pass, respectively. A first lens among the plurality of lenses may include a first protrusion protruding in the optical axis direction. The first protrusion may form at least a portion of the non-effective region. The first protrusion may be configured to face a non-effective region of a second lens adjacent to the first lens in the optical axis direction among the plurality of lenses.

According to an embodiment, an electronic device includes a housing including a first surface and a second surface opposite the first surface. The electronic device may include a display disposed on the first surface. The electronic device may include a camera disposed on the first surface. The camera may include a plurality of lenses arranged in an optical axis direction. The camera may include a lens housing configured to accommodate a plurality of lenses. The camera may include an image sensor including an imaging area. The imaging area may include a first periphery having a first length and a second periphery having a second length greater than the first length. The plurality of lenses may include an effective region through which light passes and a non-effective region through which light does not pass, respectively. A first lens among the plurality of lenses may include a first protrusion protruding in the optical axis direction. The first protrusion may form at least a portion of the non-effective region. The first protrusion may be configured to face a non-effective region of a second lens adjacent to the first lens in the optical axis direction among the plurality of lenses.

According to an embodiment, an electronic device includes a housing including a first surface and a second surface opposite the first surface. The electronic device may include a plurality of cameras disposed on the second surface. Each of the plurality of cameras may include a plurality of lenses arranged in an optical axis direction. Each of the plurality of cameras may include a lens housing configured to accommodate the plurality of lenses. Each of the plurality of cameras may include an image sensor including an imaging area. The imaging area may include a first periphery having a first length and a second periphery having a second length greater than the first length. The plurality of lenses may include an effective region through which light passes, and a non-effective region through which light does not pass, respectively. A first lens among the plurality of lenses may include a first protrusion protruding in the optical axis direction. The first protrusion may form at least a portion of the non-effective region. The first protrusion may be configured to face a non-effective region of a second lens adjacent to the first lens in the optical axis direction among the plurality of lenses.

### BRIEF DESCRIPTION OF THE DRAWINGS

The above and other aspects, features, and advantages of certain embodiments of the disclosure will become apparent from the following detailed description with reference to the accompanying drawings, in which:
FIG. 1 illustrates a block diagram of an electronic device in a network environment according to an embodiment;
FIG. 2A illustrates a perspective view of an electronic device viewed in one direction according to an embodiment;
FIG. 2B illustrates a perspective view of an electronic device viewed in another direction according to an embodiment;
FIG. 2C illustrates an exploded perspective view of an electronic device according to an embodiment;
FIG. 3 illustrates a block diagram of a camera module according to an embodiment;
FIG. 4 illustrates a perspective view of a camera according to an embodiment;
FIG. 5 illustrates a perspective view of a portion of a camera module according to an embodiment;
FIG. 6 illustrates a perspective view of a lens assembly according to an embodiment;
FIG. 7 illustrates an exploded perspective view of a lens assembly according to an embodiment;
FIG. 8 illustrates a plan view of a first lens according to an embodiment;
FIG. 9 illustrates a side view of a first lens according to an embodiment;
FIG. 10 illustrates a plan view of a second lens according to an embodiment;
FIG. 11 illustrates a cross-sectional view of the lens assembly of FIG. 6 taken along a line 11-11 according to an embodiment;
FIG. 12 illustrates a cross-sectional view of the lens assembly of FIG. 6 taken along a line 12-12 according to an embodiment;
FIG. 13 illustrates an enlarged view of a portion of a cross-section of the lens assembly of FIG. 11 according to an embodiment;
FIG. 14 illustrates a view of a portion of a cross-section of a first lens of a lens assembly according to an embodiment;
FIG. 15 illustrates a plan view of a portion of a front side of an electronic device according to an embodiment;
FIG. 16 illustrates a cross-sectional view of the electronic device of FIG. 15 taken along a line 16-16 according to an embodiment;
FIG. 17 illustrates a plan view of a portion of a rear side of an electronic device according to an embodiment; and
FIG. 18 illustrates a cross-sectional view of the electronic device of FIG. 17 taken along a line 18-18 according to an embodiment.

### DETAILED DESCRIPTION

Hereinafter, embodiments are described in detail with reference to the accompanying drawings. When describing the embodiments with reference to the accompanying drawings, like reference numerals refer to like elements and a repeated description related thereto will be omitted.

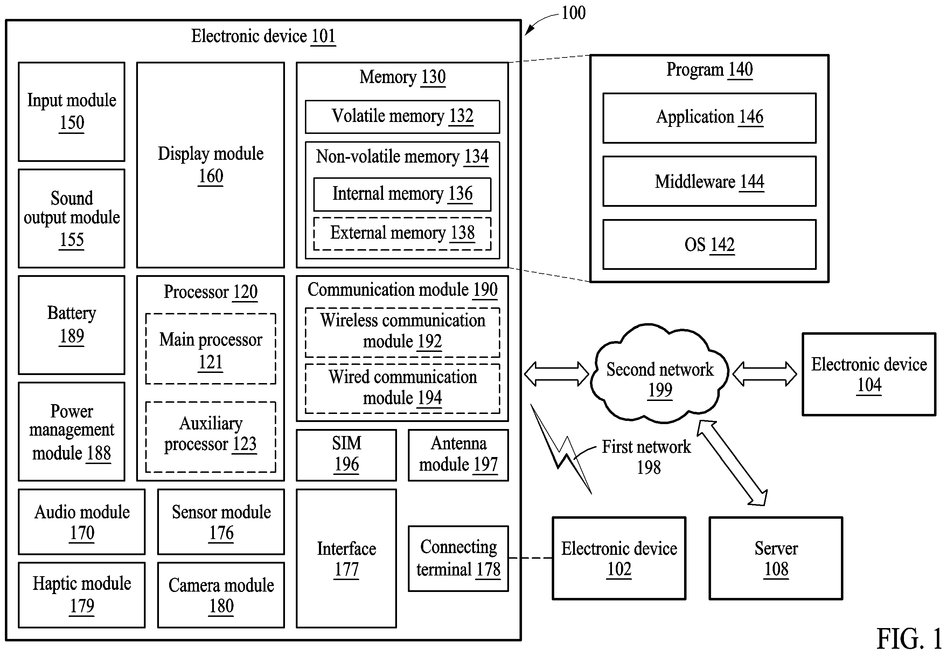

FIG. 1 illustrates a block diagram of an electronic device in a network environment according to an embodiment.

Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101 instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning algorithms. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide region network (WAN)). These various types of communication modules may be implemented as a single component (e.g., a single chip) or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, for example, a high data transmission rate. The wireless communication module 192 may support various technologies for securing performance on a high-frequency band, such as, for example, beamforming, massive multipleinput and multiple-output (MIMO), full dimensional MIMO (FD-MIMO), an array antenna, analog beam-forming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of a downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performing to the electronic device 101. The electronic device 101 may provide the result, with or without further processing of the result, as at least part of a response to the request. To that end, cloud computing, distributed computing, mobile edge computing (MEC), or client-server computing technology may be used. The electronic device 101 may provide ultra low-latency services using, for example, distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "1^{st}", "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments of the disclosure as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same manner or in a similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

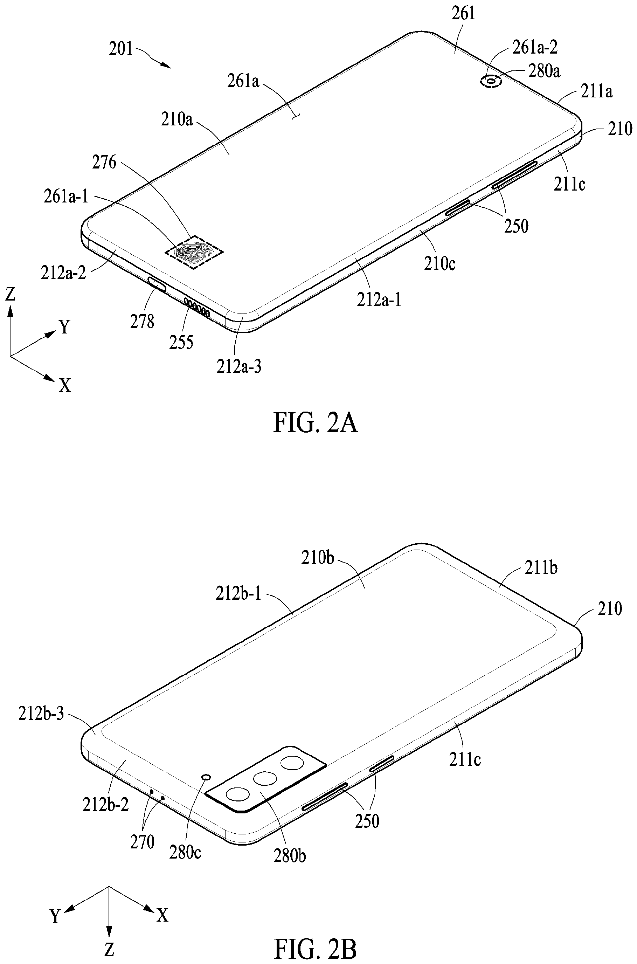

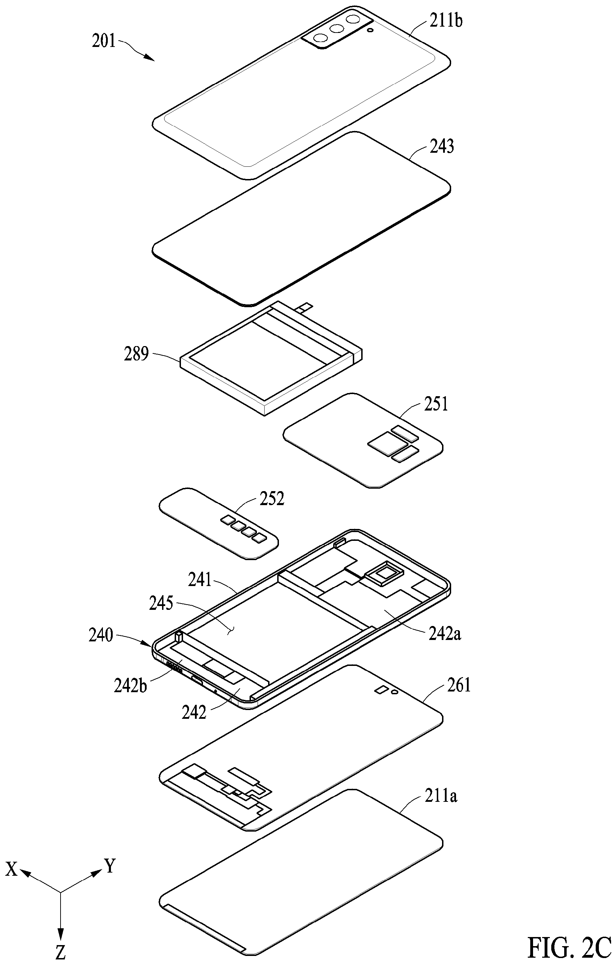

FIG. 2A illustrates a perspective view of an electronic device viewed in one direction according to an embodiment. FIG. 2B illustrates a perspective view of an electronic device viewed in another direction according to an embodiment. FIG. 2C illustrates an exploded perspective view of an electronic device according to an embodiment.

Referring to FIGS. 2A to 2C, an electronic device 201 (e.g., the electronic device 101 of FIG. 1) may include a housing 210 including a first surface 210a (e.g., a front surface), a second surface 210b (e.g., a rear surface), and a third surface 210c (e.g., a side surface) enclosing a space between the first surface 210a and the second surface 210b.

In an embodiment, the first surface 210a may be formed by a first plate 211a of which at least a portion is substantially transparent. For example, the first plate 211a may include a polymer plate or a glass plate including at least one coating layer. In an embodiment, the second surface 210b may be formed by a second plate 211b that is substantially opaque. For example, the second plate 211b may be formed of coated or tinted glass, ceramic, polymer, metal (e.g., aluminum, stainless steel (STS), or magnesium), or a combination thereof. In an embodiment, the third surface 210c may be formed by a frame 211c that is coupled to the first plate 211a and the second plate 211b and that includes a metal and/or a polymer. In an embodiment, the second plate 211b and the frame 211c may be integrated and seamlessly formed. In an embodiment, the second plate 211b and the frame 211c may be formed of substantially the same material (e.g., aluminum).

In an embodiment, the first plate 211a may include a plurality of first periphery areas 212a-1. The plurality of first periphery areas 212a-1 may face the second plate 211b from at least a portion of the first surface 210a. The plurality of first periphery areas 212a-1 may contact the frame 211c. The plurality of first periphery areas 212a-1 may extend in one direction (e.g., a +/-Y direction). The first plate 211a may include a plurality of second periphery areas 212a-2. The plurality of second periphery areas 212a-2 may face the second plate 211b from at least a portion of the first surface 210a. The plurality of second periphery areas 212a-2 may contact the frame 211c. The plurality of second periphery areas 212a-2 may extend in a direction (e.g., a +/-X direction) different from the extending direction (e.g., the +/-Y direction) of the plurality of first periphery areas 212a-1. The first plate 211a may include a plurality of third periphery areas 212a-3. The plurality of third periphery areas 212a-3 may face the second plate 211b from at least a portion of the first surface 210a. The plurality of third periphery areas 212a-3 may contact the frame 211c. The plurality of third periphery areas 212a-3 may be disposed between the plurality of first periphery areas 212a-1 and the plurality of second periphery areas 212a-2.

In an embodiment, the second plate 211b may include a plurality of fourth periphery areas 212b-1. The plurality of fourth periphery areas 212b-1 may face the first plate 211a from at least a portion of the second surface 210b. The plurality of fourth periphery areas 212b-1 may contact the frame 211c. The plurality of fourth periphery areas 212b-1 may extend in one direction (e.g., the +/-Y direction). The second plate 211b may include a plurality of fifth periphery areas 212b-2. The plurality of fifth periphery areas 212b-2 may face the first plate 211a from at least a portion of the second surface 210b. The plurality of fifth periphery areas 212b-2 may contact the frame 211c. The plurality of fifth periphery areas 212b-2 may extend in a direction (e.g., the +/-X direction) different from the extending direction (e.g., the +/-Y direction) of the plurality of fourth periphery areas 212b-1. The second plate 211b may include a plurality of sixth periphery areas 212b-3. The plurality of sixth periphery areas 212b-3 may face the first plate 211a from at least a portion of the second surface 210b. The plurality of sixth periphery areas 212b-3 may contact the frame 211c. The plurality of sixth periphery areas 212b-3 may be disposed between the plurality of fourth periphery areas 212b-1 and the plurality of fifth periphery areas 212b-2.

In an embodiment, the electronic device 201 may include a display 261 (e.g., the display module 160 of FIG. 1). In an embodiment, the display 261 may be positioned on the first surface 210a. In an embodiment, the display 261 may be visible through at least a portion (e.g., the plurality of first periphery areas 212a-1, the plurality of second periphery areas 212a-2, and/or the plurality of third periphery areas 212a-3) of the first plate 211a. In an embodiment, the display 261 may have a shape that is substantially the same as the shape of an outer edge of the first plate 211a. In an embodiment, the periphery of the display 261 may substantially coincide with the outer edge of the first plate 211a.

In an embodiment, the display 261 may include a touch sensing circuit, a pressure sensor for measuring an intensity (pressure) of a touch, and/or a digitizer for detecting a magnetic-type stylus pen.

In an embodiment, the display 261 may include a screen display area 261a that is visually exposed to display content using pixels. In an embodiment, the screen display area 261a may include a sensing area 261a-1. The sensing area 261a-1 may overlap at least one area of the screen display area 261a. The sensing area 261a-1 may allow transmission of an input signal related to a sensor module 276 (e.g., the sensor module 176 of FIG. 1). The sensing area 261a-1 may display content, similarly to the screen display area 261a that does not overlap the sensing area 261a-1. For example, the sensing area 261a-1 may display the content while the sensor module 276 is not operating. At least one area of a camera area 261a-2 may overlap the screen display area 261a. In an embodiment, the screen display area 261a may include the camera area 261a-2. The camera area 261a-2 may allow transmission of an optical signal related to a first camera module 280a (e.g., the camera module 180 of FIG. 1). The at least one area of the camera area 261a-2 overlapping the screen display area 261a may display content, similarly to the screen display area 261a that does not overlap the camera area 261a-2. For example, the camera area 261a-2 may display the content while the first camera module 280a is not operating.

In an embodiment, the electronic device 201 may include an audio module 270 (e.g., the audio module 170 of FIG. 1). In an embodiment, the audio module 270 may be positioned on the third surface 210c. In an embodiment, the audio module 270 may obtain sound through at least one hole.

In an embodiment, the electronic device 201 may include the sensor module 276. In an embodiment, the sensor module 276 may be positioned on the first surface 210a. The sensor module 276 may form the sensing area 261a-1 in at least a portion of the screen display area 261a. The sensor module 276 may receive an input signal transmitted through the sensing area 261a-1 and generate an electrical signal based on the received input signal. For example, the input signal may have a designated physical quantity (e.g., heat, light, temperature, sound, pressure, or ultrasound). In an example, the input signal may include a signal related to biometric information (e.g., a fingerprint) of a user.

In an embodiment, the electronic device 201 may include the first camera module 280a (e.g., the camera module 180 of FIG. 1). In an embodiment, the first camera module 280a may be positioned on the first surface 210a. In an embodiment, at least a portion of the first camera module 280a may be positioned under the display 261. In an embodiment, the first camera module 280a may receive an optical signal transmitted through the camera area 261a-2.

In an embodiment, the electronic device 201 may include a second camera module 280b (e.g., the camera module 180 of FIG. 1). The second camera module 280b may be positioned on the second surface 210b. In an embodiment, the second camera module 280b may include a plurality of camera modules (e.g., a dual camera, a triple camera, or a quad camera).

In an embodiment, the electronic device 201 may include a flash 280c. The flash 280c may be positioned on the second surface 210b. In an embodiment, the flash 280c may include a light-emitting diode or a xenon lamp.

In an embodiment, the electronic device 201 may include a sound output module 255 (e.g., the sound output module 155 of FIG. 1). In an embodiment, the sound output module 255 may be positioned on the third surface 210c. In an embodiment, the sound output module 255 may include one or more holes.

The electronic device 201 may include an input module 250 (e.g., the input module 150 of FIG. 1). In an embodiment, the input module 250 may be positioned on the third surface 210c. In an embodiment, the input module 250 may include at least one key input device.

In an embodiment, the electronic device 201 may include a connecting terminal 278 (e.g., the connecting terminal 178 of FIG. 1). In an embodiment, the connecting terminal 278 may be positioned on the third surface 210c. For example, when the electronic device 201 is viewed in one direction (e.g., the +Y direction), the connecting terminal 278 may be positioned substantially in a central portion of the third surface 210c, and the sound output module 255 may be positioned on one side (e.g., a right side) with respect to the connecting terminal 278.

In an embodiment, the electronic device 201 may include a support body 240, a first circuit board 251, a second circuit board 252, and a battery 289 (e.g., the battery 189 of FIG. 1). At least a portion of the support body 240 may form the housing 210 together with the first plate 211a and the second plate 211b.

In an embodiment, the support body 240 may include a first frame structure 241, a second frame structure 243, and a plate structure 242. The first frame structure 241 may surround the periphery of the plate structure 242. The first frame structure 241 may connect the periphery of the first plate 211a and the periphery of the second plate 211b. The first frame structure 241 may surround a space between the first plate 211a and the second plate 211b. At least a portion of the first frame structure 241 may form the third surface 210c of the electronic device 201. The second frame structure 243 may be positioned between the first frame structure 241 and the second plate 211b. The first frame structure 241 and the second frame structure 243 may at least partially form the frame 211c. The plate structure 242 may include a first portion 242a for accommodating the first circuit board 251 and a second portion 242b for accommodating the second circuit board 252. The display 261 may be positioned on one surface (e.g., a bottom surface or a +Z-axis direction) of the plate structure 242. The first circuit board 251 and the second circuit board 252 may be positioned on the other surface (e.g., a top surface or a -Z-axis direction) of the plate structure 242. In an embodiment, the plate structure 242 may include an opening 245. The opening 245 may be positioned between the first portion 242a and the second portion 242b. The opening 245 may pass through both surfaces of the plate structure 242. The opening 245 may accommodate the battery 289.

Meanwhile, the one or more embodiments provided herein may also apply to electronic devices of various shapes or forms (e.g., a foldable electronic device, a slidable electronic device, a digital camera, a digital video camera, a tablet PC, a laptop computer, and other electronic devices) in addition to the electronic device shown in FIGS. 2A to 2C.

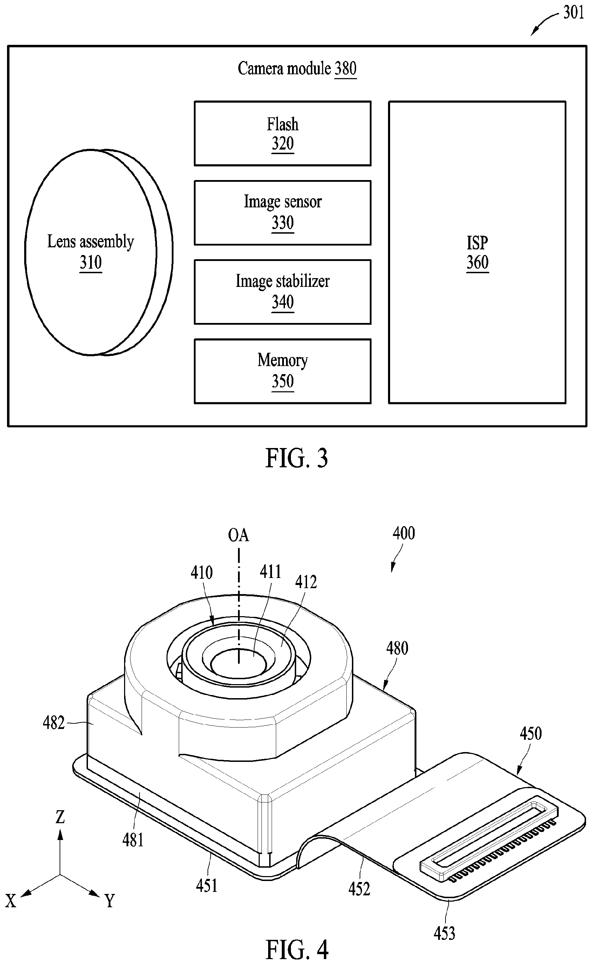

FIG. 3 illustrates a block diagram of a camera module according to an embodiment.

Referring to FIG. 3, a camera module 380 (e.g., the camera module 180 of FIG. 1 or the first camera module 280a and/or the second camera module 280b of FIGS. 2A to 2C) may include a lens assembly 310, a flash 320, an image sensor 330, an image stabilizer 340, a memory 350 (e.g., a buffer memory), or an ISP 360. The lens assembly 310 may collect light emitted from an object which is a target of which an image is to be captured. The lens assembly 310 may include one or more lenses. According to an embodiment, the camera module 380 may include a plurality of lens assemblies 310. In this case, the camera module 380 may include, for example, a dual camera, a 360-degree camera, or a spherical camera. A portion of the plurality of lens assemblies 310 may have the same lens properties (e.g., an angle of view, a focal length, an auto focus, an f number, or an optical zoom), or at least one of the lens assemblies 310 may have one or more lens properties that are different from those of other lens assemblies. The lens assembly 310 may include, for example, a wide-angle lens or a telephoto lens.

The flash 320 may emit light to be used to enhance light emitted or reflected from the object. According to an embodiment, the flash 320 may include one or more light emitting diodes (LEDs) (e.g., a red-green-blue (RGB) LED, a white LED, an IR LED, or an ultraviolet (UV) LED), or a xenon lamp. The image sensor 330 may obtain an image corresponding to the object by converting light emitted or reflected from the object and transmitted through the lens assembly 310 into an electrical signal. According to an embodiment, the image sensor 330 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 330 may be implemented using, for example, a charged coupled device (CCD) sensor or a complementary metal-oxide-semiconductor (CMOS) sensor.

The image stabilizer 340 may move at least one lens included in the lens assembly 310 or the image sensor 330 in a predetermined direction or control an operation characteristic (e.g., adjust the read-out timing) of the image sensor 330 in response to a movement of the camera module 380 or an electronic device 301 including the camera module 380. This may compensate for at least a portion of a negative effect of the movement on an image to be captured. According to an embodiment, the image stabilizer 340 may sense such a movement of the camera module 380 or the electronic device 301 using a gyro sensor (not shown) or an acceleration sensor (not shown) disposed inside or outside the camera module 380. According to an embodiment, the image stabilizer 340 may be implemented as, for example, an optical image stabilizer. The memory 350 may temporarily store therein at least a portion of the image obtained through the image sensor 330 for a subsequent image processing operation. For example, when image acquisition is delayed by a shutter or a plurality of images is obtained at a high speed, an obtained original image (e.g., a Bayer-patterned image or a high-resolution image) may be stored in the memory 350 and a copy image (e.g., a low-resolution image) corresponding to the original image may be previewed through the display module 160. Subsequently, when a specified condition (e.g., a user input or a system command) is satisfied, at least a portion of the original image stored in the memory 350 may be obtained and processed by, for example, the ISP 360. According to an embodiment, the memory 350 may be configured as at least a part of the memory 130 or as a separate memory operated independently of the memory 130.

The ISP 360 may perform one or more image processing operations on an image obtained through the image sensor 330 or an image stored in the memory 350. The image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 360 may control at least one of the components (e.g., the image sensor 330) included in the camera module 380. For example, the ISP 360 may control an exposure time, a read-out timing, and the like. The image processed by the ISP 360 may be stored again in the memory 350 for further processing or be provided to an external component (e.g., the memory 130, the display module 160, the electronic device 102, the electronic device 104, or the server 108 of FIG. 1) of the camera module 380. According to an embodiment, the ISP 360 may be configured as at least a part of a processor (e.g., the processor 120) or as a separate processor operated independently of the processor. When the ISP 360 is configured as a processor separate from the processor, at least one image processed by the ISP 360 may be displayed as it is without a change or be displayed through a display module (e.g., the display module 160) after additional image processing is performed by the processor.

According to an embodiment, the electronic device 301 may include a plurality of camera modules 380 having different properties or functions. In this case, for example, at least one of the plurality of camera modules 380 may be a wide-angle camera, and at least another one of the plurality of camera modules 380 may be a telephoto camera. Similarly, at least one of the plurality of camera modules 380 may be a front camera, and at least another one of the plurality of camera modules 380 may be a rear camera.

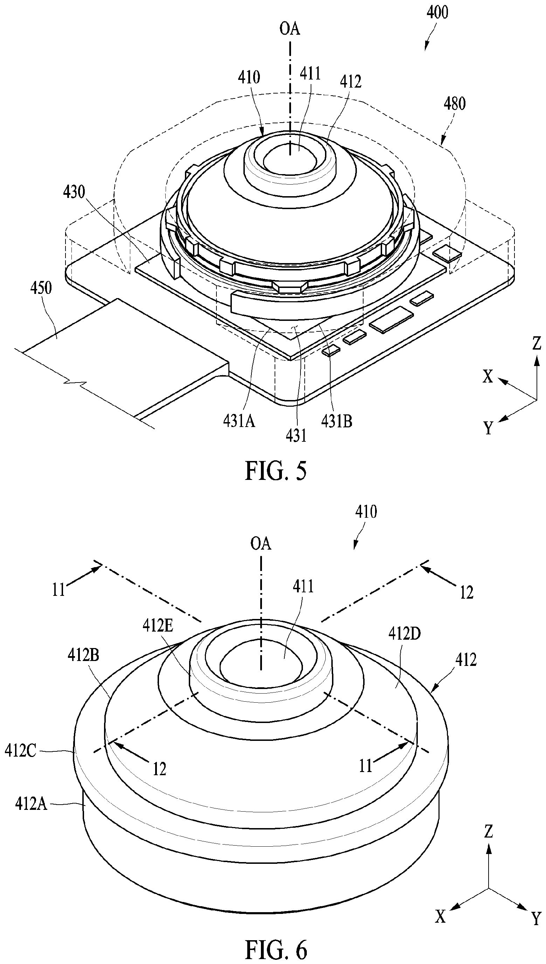

FIG. 4 illustrates a perspective view of a camera according to an embodiment. FIG. 5 illustrates a perspective view of a portion of a camera module according to an embodiment.

Referring to FIGS. 4 and 5, a camera 400 (e.g., the camera module 180 of FIG. 1, the first camera module 280a and/or the second camera module 280b of FIGS. 2A to 2C, and/or the camera module 380 of FIG. 3) may include a lens assembly 410 (e.g., the lens assembly 310 of FIG. 3).

In an embodiment, the lens assembly 410 may include at least one lens 411. The at least one lens 411 may have an optical axis (OA) (e.g., a +Z axis). The OA may go through the center of the at least one lens 411. The OA may be perpendicular to the at least one lens 411. In an embodiment, a plurality of lenses 411 may be arranged along the OA. In an embodiment, a plurality of lenses 411 may be arranged in an OA direction. In the description, the term "OA direction" can be understood as a direction which is parallel to OA. For examples, an OA direction of FIG. 4 can be considered as a +/-Z direction.

In an embodiment, the lens assembly 410 may include a lens housing 412. The lens housing 412 may be configured to accommodate at least one lens 411. The lens housing 412 may include an opening exposing at least a portion of the at least one lens 411. The lens housing 412 may at least partially enclose the at least one lens 411.

In an embodiment, the camera 400 may include an image sensor 430. The image sensor 430 may be disposed in an OA direction (e.g., a +/-Z direction) from the plurality of lenses 411.

In an embodiment, the image sensor 430 may include an imaging area 431. The imaging area 431 may be an area where light is received and an image is formed. The imaging area 431 may be at least a part of an area of the image sensor 430.

In an embodiment, the imaging area 431 may include a plurality of (e.g., two) first peripheries 431A. The plurality of first peripheries 431A may extend in a first direction (e.g., a +/-X direction). A first edge-wise direction (e.g., a short-side direction) of the plurality of first peripheries 431A may be substantially parallel to the first direction (e.g., the +/-X direction).

In an embodiment, the imaging area 431 may include a plurality of (e.g., two) second peripheries 431B. The plurality of second peripheries 431B may be positioned between the plurality of first peripheries 431A. The plurality of second peripheries 431B may connect the plurality of first peripheries 431A. The plurality of second peripheries 431B may extend in a second direction (e.g., a +/-Y direction) intersecting (e.g., perpendicular to) the first direction (e.g., the +/-X direction). A second edge-wise direction (e.g., a long-side direction) of the plurality of second peripheries 431B may be substantially parallel to the second direction (e.g., the +/-Y direction).

In an embodiment, a length of each of the plurality of first peripheries 431A may be smaller than a length of each of the plurality of second peripheries 431B. In an embodiment, a length of each of the plurality of first peripheries 431A may be substantially equal to a length of each of the plurality of second peripheries 431B. In an embodiment, a length of each of the plurality of first peripheries 431A may be greater than a length of each of the plurality of second peripheries 431B.

In an embodiment, the camera 400 may include an auto focus (AF) actuator (not shown). The AF actuator may be configured to adjust a focus of at least one lens 411. For example, the AF actuator may move the at least one lens 411 in a direction substantially parallel to the OA (e.g., a +/-Z direction or an OA direction).

In an embodiment, the camera 400 may include an optical image stabilization (OIS) actuator (not shown) (e.g., the image stabilizer 340 of FIG. 3). The OIS actuator may move the at least one lens 411 in the first direction (e.g., the +/-X direction) and/or the second direction (e.g., the +/-Y direction) in response to a movement of the camera 400.

In an embodiment, the camera 400 may include a PCB 450. The PCB 450 may connect the camera 400 and another PCB (e.g., the first circuit board 251 of FIG. 2C). In an embodiment, the PCB 450 may include a substrate portion 451, a connector portion 453, and a connection portion 452 connecting the substrate portion 451 and the connector portion 453. In an embodiment, the image sensor 430 may be disposed on the substrate portion 451.

In an embodiment, the camera 400 may include a housing assembly 480. The housing assembly 480 may include a camera housing 481 configured to at least partially accommodate the lens assembly 410, the AF actuator, and the OIS actuator. The housing assembly 480 may include a cover 482. The cover 482 may be configured to be coupled with the camera housing 481. The cover 482 may be configured to protect components of the camera 400 from the outside. The cover 482 may be configured to shield the outside of the camera 400.

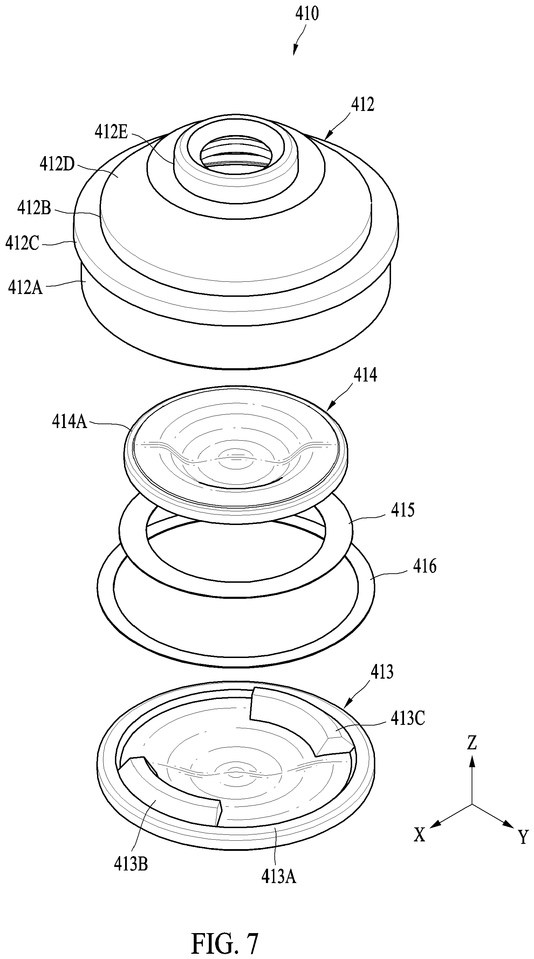

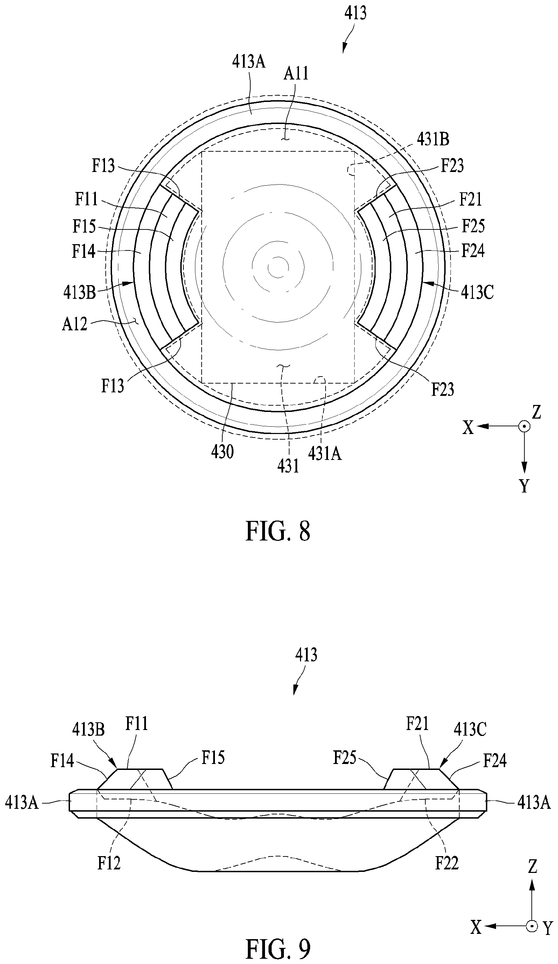

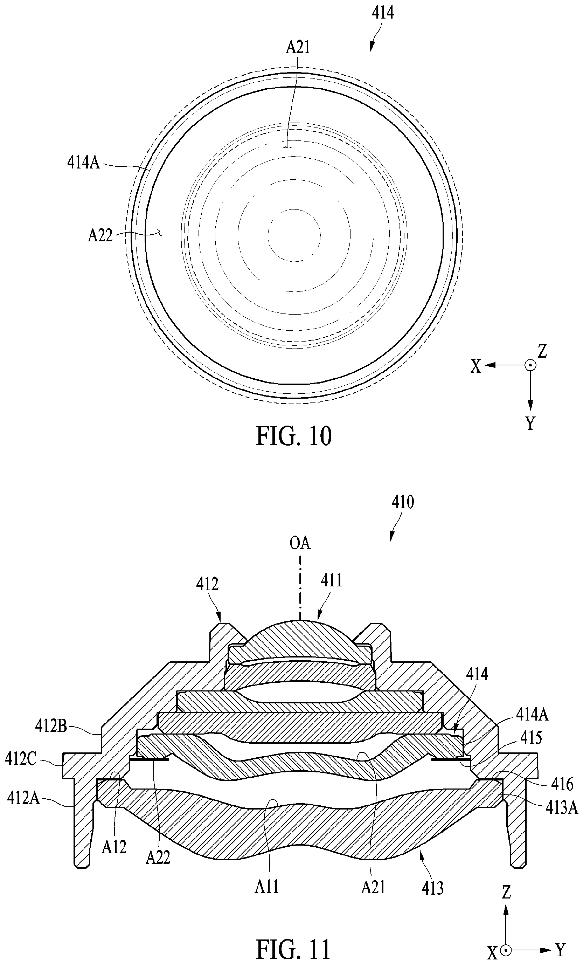

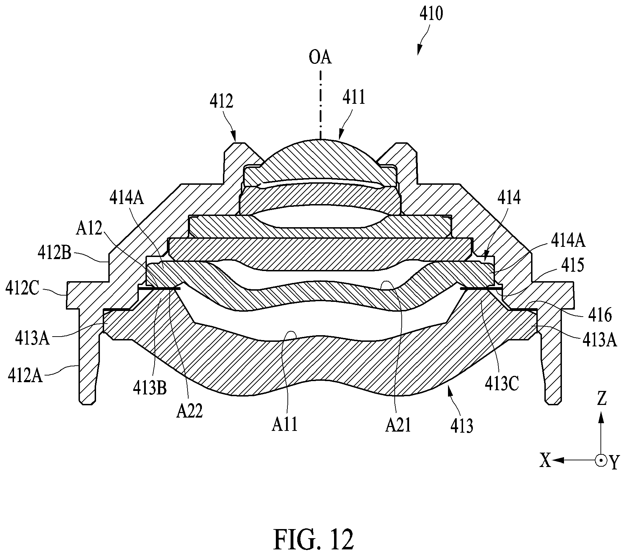

FIG. 6 illustrates a perspective view of a lens assembly according to an embodiment. FIG. 7 illustrates an exploded perspective view of a lens assembly according to an embodiment. FIG. 8 illustrates a plan view of a first lens according to an embodiment. FIG. 9 illustrates a side view of a first lens according to an embodiment. FIG. 10 illustrates a plan view of a second lens according to an embodiment. FIG. 11 illustrates a cross-sectional view of the lens assembly of FIG. 6 taken along a line 11-11 according to an embodiment. FIG. 12 illustrates a cross-sectional view of the lens assembly of FIG. 6 taken along a line 12-12 according to an embodiment.

Referring to FIGS. 6 to 12, the lens assembly 410 may include a plurality of lenses 411. The plurality of lenses 411 may include a first lens 413 and a second lens 414. In an embodiment not shown, the plurality of lenses 411 may include at least one lens in addition to the first lens 413 and the second lens 414.

In an embodiment, the lens assembly 410 may include the lens housing 412. The lens housing 412 may be configured to at least partially accommodate the plurality of lenses 411.

In an embodiment, the lens housing 412 may include a first body portion 412A. The first body portion 412A may surround the first lens 413. The first body portion 412A may have a substantially cylindrical shape. The first body portion 412A may have a first outside diameter.

In an embodiment, the lens housing 412 may include a second body portion 412B. The second body portion 412B may surround the second lens 414. The second body portion 412B may have a substantially cylindrical shape. The second body portion 412B may have a second outside diameter substantially equal to or smaller than the first outside diameter.

In an embodiment, the lens housing 412 may include a shoulder portion 412C. The shoulder portion 412C may be positioned between the first body portion 412A and the second body portion 412B. The shoulder portion 412C may form a step between the first body portion 412A and the second body portion 412B. For example, the shoulder portion 412C may have a greater outside diameter than the first outside diameter and the second outside diameter.

In an embodiment, the lens housing 412 may include a third body portion 412D. The third body portion 412D may surround an additional lens (not shown). The third body portion 412D may be connected to the second body portion 412B. The third body portion 412D may have an outside diameter that decreases in an OA direction (e.g., the +/-Z direction) from the second body portion 412B.

In an embodiment, the lens housing 412 may include a fourth body portion 412E. The fourth body portion 412E may surround at least one additional lens (not shown). The fourth body portion 412E may be connected to the third body portion 412D. The fourth body portion 412E may have a substantially constant outside diameter in the OA direction (e.g., the +/-Z direction) from the third body portion 412D.

In an embodiment, the first lens 413 may include a first effective region A11. The first effective region A11 may be a region through which light passes through the first lens 413. In an embodiment, the first effective region A11 may at least partially overlap the imaging area 431 of the image sensor 430 when viewed in the OA direction (e.g., the +/-Z direction). In an embodiment, a size of the first effective region A11 may be substantially equal to or greater than a size of the imaging area 431.

In an embodiment, the first lens 413 may include a first non-effective region A12. The first non-effective region A12 may be a region in which light does not substantially pass through the first lens 413. For example, in the first non-effective region A12, light may move inside the first lens 413 but may not substantially enter the first lens 413 from outside the first lens 413 or may not substantially come out of the first lens 413 from the inside of the first lens 413.

In an embodiment, the first non-effective region A12 may be positioned on the outer side of the first effective region A11. At least a portion of the first non-effective region A12 may be positioned in a radial direction of the first lens 413 from the first effective region A11.

In an embodiment, the first lens 413 may include a first flange 413A. The first flange 413A may be fixed to the lens housing 412. The first flange 413A may form at least a portion of the first non-effective region A12. In an embodiment, the first flange 413A may include a substantially ring-like shape.

In an embodiment, the first lens 413 may include a first protrusion 413B. The first protrusion 413B may be configured to support the second lens 414. The first protrusion 413B may be configured to protrude in the OA direction (e.g., the +/-Z direction). The first protrusion 413B may form at least a portion of the first non-effective region A12.

In an embodiment, the first protrusion 413B may include a first surface F11, a second surface F12 opposite to the first surface F11, and a plurality of first side surfaces F13, F14, and F15 between the first surface F11 and the second surface F12. The first surface F11 may be offset from the first flange 413A by a predetermined distance. The distance between the first surface F11 and the first flange 413A may be defined as a distance between the first lens 413 and the second lens 414. The first surface F11 may face at least a portion (e.g., a second non-effective region A22) of the second lens 414.

In an embodiment, the first protrusion 413B may extend at least partially in a circumferential direction of the first lens 413. For example, the first protrusion 413B may extend at least partially along the circumference of the first effective region A11. In an embodiment, the first protrusion 413B may include a plurality of first circumferential side surfaces F13.

In an embodiment, the first protrusion 413B may include a first outer inclined surface F14. The first outer inclined surface F14 may be inclined with respect to each of the first surface F11 and the first flange 413A. The first outer inclined surface F14 may be connected to the first surface F11 and the first flange 413A.

In an embodiment, the first protrusion 413B may include a first inner inclined surface F15. The first inner inclined surface F15 may be inclined with respect to each of the first surface F11 and the first effective region A11. The first inner inclined surface F15 may be connected to the first surface F11 and the first effective region A11.

In an embodiment, the first protrusion 413B may be disposed outside the imaging area 431 of the image sensor 430. In an embodiment, the first protrusion 413B may be disposed in a direction (e.g., the +/-X direction) parallel to the first edge-wise direction along the first periphery 431A of the imaging area 431 of the image sensor 430. In an embodiment, the first protrusion 413B may not be disposed in a direction (e.g., the +/-Y direction) parallel to the second edge-wise direction along the second periphery 431B of the imaging area 431 of the image sensor 430. In an embodiment, the first protrusion 413B may not substantially overlap the imaging area 431 when viewed in the OA direction (e.g., the +/-Z direction).

In an embodiment, the first lens 413 may include a second protrusion 413C. The second protrusion 413C may be configured to support the second lens 414. The second protrusion 413C may be configured to protrude in the OA direction (e.g., the +/-Z direction). The second protrusion 413C may form at least a portion of the first non-effective region A12.

In an embodiment, the second protrusion 413C may include a third surface F21, a fourth surface F22 opposite to the third surface F21, and a plurality of second side surfaces F23, F24, and F25 between the third surface F21 and the fourth surface F22. The third surface F21 may be offset by a predetermined distance from the first flange 413A. The distance between the third surface F21 and the first flange 413A may be defined as the distance between the first lens 413 and the second lens 414. The distance between the third surface F21 and the first flange 413A may be substantially the same as the distance between the first surface F11 and the first flange 413A. The third surface F21 may face at least a portion (e.g., the second non-effective region A22) of the second lens 414.

In an embodiment, the second protrusion 413C may extend at least partially in a circumferential direction of the first lens 413. For example, the second protrusion 413C may extend at least partially along the circumference of the first effective region A11. In an embodiment, the second protrusion 413C may include a plurality of second circumferential side surfaces F23.

In an embodiment, the second protrusion 413C may include a second outer inclined surface F24. The second outer inclined surface F24 may be inclined with respect to each of the third surface F21 and the first flange 413A. The second outer inclined surface F24 may be connected to the third surface F21 and the first flange 413A.

In an embodiment, the second protrusion 413C may include a second inner inclined surface F25. The second outer inclined surface F25 may be inclined with respect to each of the third surface F21 and the first effective region A11. The second outer inclined surface F25 may be connected to the third surface F21 and the first effective region A11.

In an embodiment, the second protrusion 413C may be disposed outside the imaging area 431 of the image sensor 430. In an embodiment, the second protrusion 413C may be disposed in a direction (e.g., the +/-X direction) parallel to the first edge-wise direction along the first periphery 431A of the imaging area 431 of the image sensor 430. In an embodiment, the second protrusion 413C may be disposed opposite to the first protrusion 413B. In an embodiment, the second protrusion 413C may not be disposed in a direction (e.g., the +/-Y direction) parallel to the second edge-wise direction along the second periphery 431B of the imaging area 431 of the image sensor 430. In an embodiment, the second protrusion 413C may not substantially overlap the imaging area 431 when viewed in the OA direction (e.g., the +/-Z direction).

In an embodiment, the second lens 414 may include a second effective region A21. The second effective region A21 may be a region through which light passes through the second lens 414. In an embodiment, the second effective region A21 may include a substantially circular area. In an embodiment, a size of the second effective region A21 may be substantially equal to or smaller than a size of the first effective region A11.

In an embodiment, the second lens 414 may include a second non-effective region A22. The second non-effective region A22 may be a region in which light does not substantially pass through the second lens 414. For example, in the second non-effective region A22, light may move inside the second lens 414 but may not substantially enter the second lens 414 from outside the second lens 414 or may not substantially come out of the second lens 414 from the inside of the second lens 414.

In an embodiment, the second non-effective region A22 may be positioned on the outer side of the second effective region A21. The second non-effective region A22 may be positioned in a radial direction of the second lens 414 from the second effective region A21. In an embodiment, the second non-effective region A22 may have a substantially ring-like shape.

In an embodiment, the second lens 414 may include a second flange 414A. The second flange 414A may be fixed to the lens housing 412. The second flange 414A may form at least a portion of the second non-effective region A22. In an embodiment, the second flange 414A may include a substantially ring-like shape.

In an embodiment, the lens assembly 410 may include a first mask 415. The first mask 415 may be configured to substantially block the movement of light from the first non-effective region A12 to the second non-effective region A22 and/or from the second non-effective region A22 to the first non-effective region A12. The first mask 415 may be disposed between the first protrusion 413B and the second flange 414A and between the second protrusion 413C and the second flange 414A. The first mask 415 may include a substantially ring-like shape. The first mask 415 may include a substantially thin film.

In an embodiment, the lens assembly 410 may include a second mask 416. The second mask 416 may be configured to substantially block the movement of light from the first non-effective region A12 to the second non-effective region A22 and/or from the second non-effective region A22 to the first non-effective region A12. The second mask 416 may be disposed on the first flange 413A. The second mask 416 may include a substantially ring-like shape. A diameter of the second mask 416 may be greater than a diameter of the first mask 415. The second mask 416 may include a substantially thin film.

In an embodiment not shown, the lens assembly 410 may include at least one mask (not shown) between the first lens 413 and a lens not shown and/or between the second lens 414 and a lens not shown.

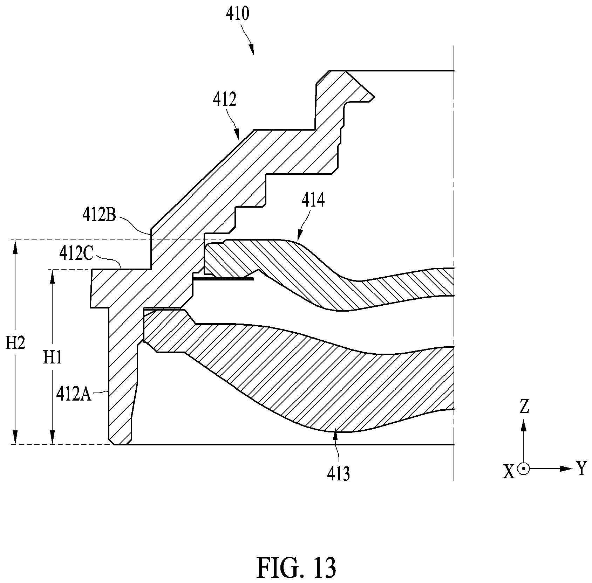

FIG. 13 illustrates an enlarged view of a portion of a cross-section of the lens assembly 410 of FIG. 11 according to an embodiment.

Referring to FIG. 13, the lens assembly 410 may include the lens housing 412, the first lens 413, and the second lens 414. The lens housing 412 may include the first body portion 412A, the second body portion 412B, and the shoulder portion 412C. A height H1 of the shoulder portion 412C may be substantially equal to or smaller than a height H2 of the second lens 414. For example, a distance between an image sensor (e.g., the image sensor 430 of FIG. 5) and the shoulder portion 412C may be substantially equal to or smaller than a distance between the image sensor and the second lens 414.

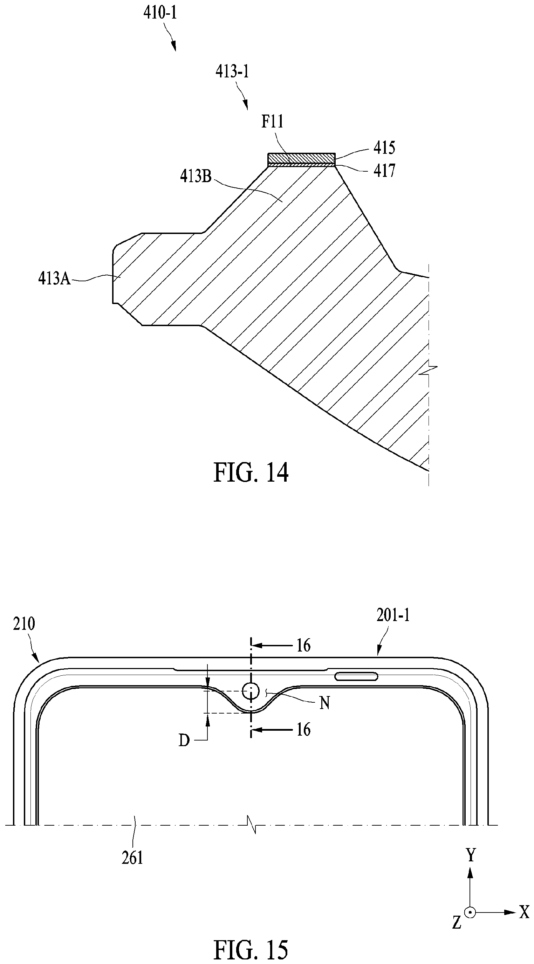

FIG. 14 illustrates a view of a portion of a cross-section of a first lens of a lens assembly according to an embodiment.

Referring to FIG. 14, a lens assembly 410-1 (e.g., the lens assembly 410 of FIGS. 6 to 13) may include a first lens 413-1 (e.g., the first lens 413 of FIGS. 6 to 13). The first lens 413-1 may include the first flange 413A and the first protrusion 413B (e.g., the first protrusion 413B of FIGS. 6 to 12). The first protrusion 413B may include the first surface F11.

In an embodiment, the first lens 413-1 may include a light absorbing layer 417. The light absorbing layer 417 may be configured to absorb light exiting from the first protrusion 413B and/or light entering the first protrusion 413B. The light absorbing layer 417 may be disposed on the first surface F11.

In an embodiment, the light absorbing layer 417 may be formed by surface treatment of the first surface F11. For example, the light absorbing layer 417 may include a microscale and/or nanoscale trap shape formed by etching the first surface F11. The trap shape may trap light.

In an embodiment not shown, the first lens 413-1 may include a light absorbing layer (e.g., the light absorbing layer 417) disposed on the third surface F21 of the second protrusion 413C of FIGS. 6 to 12.

In an embodiment, the lens assembly 410-1 may include the first mask 415. The first mask 415 may be disposed on the light absorbing layer 417. The first mask 415 may at least partially overlap the light absorbing layer 417 in an OA direction.

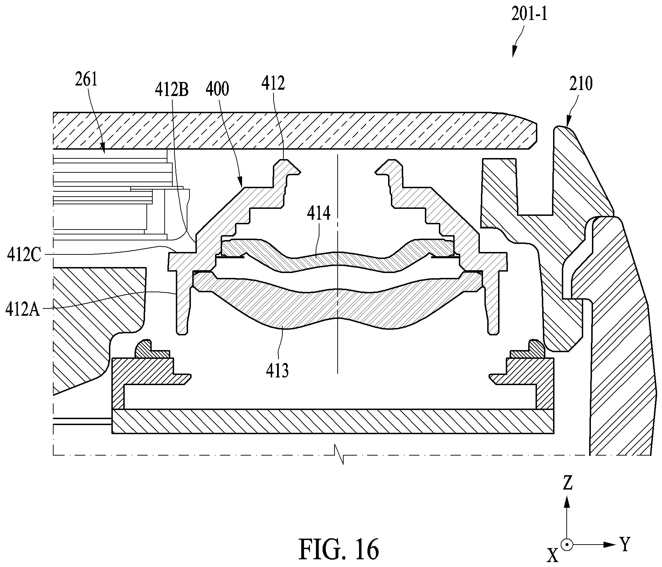

FIG. 15 illustrates a plan view of a portion of a front side of an electronic device according to an embodiment. FIG. 16 illustrates a cross-sectional view of the electronic device of FIG. 15 taken along a line 16-16 according to an embodiment.

Referring to FIGS. 15 and 16, an electronic device 201-1 (e.g., the electronic device 101 of FIG. 1 and/or the electronic device 201 of FIGS. 2A to 2C) may include the housing 210, the display 261, and the camera 400 (e.g., the first camera module 280a of FIGS. 2A to 2C and/or the camera module 380 of FIG. 3). The camera 400 may include a plurality of lenses (e.g., the first lens 413 and the second lens 414) and the lens housing 412. The lens housing 412 may include the first body portion 412A, the second body portion 412B, and the shoulder portion 412C. The lens housing 412 may be disposed so as not to contact (e.g., interfere with) the display 261. At least a portion of the display 261 may be disposed above the shoulder portion 412C. A notch length D of a notch area N of the housing 210 in which the camera 400 is disposed may be reduced.

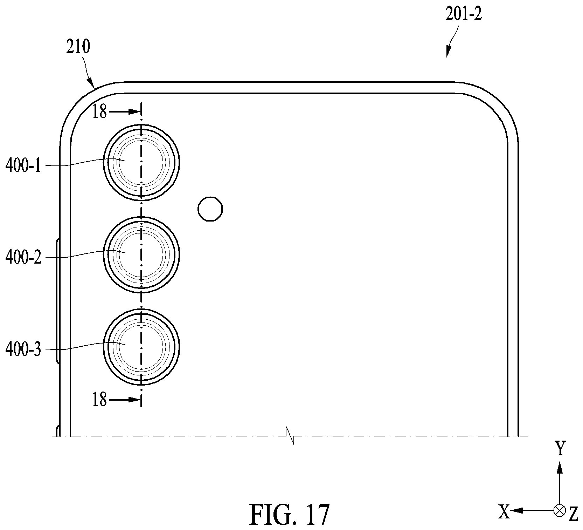

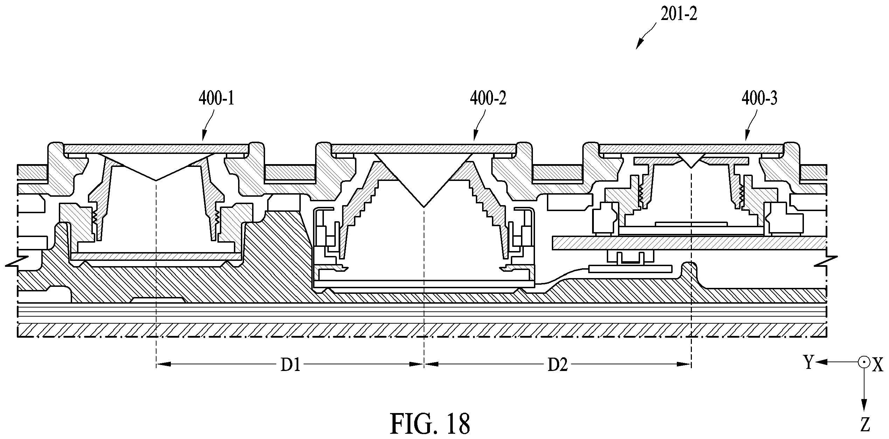

FIG. 17 illustrates a plan view of a portion of a rear side of an electronic device according to an embodiment. FIG. 18 illustrates a cross-sectional view of the electronic device of FIG. 17 taken along a line 18-18 according to an embodiment.

Referring to FIGS. 17 and 18, an electronic device 201-2 (e.g., the electronic device 101 of FIG. 1 and/or the electronic device 201 of FIGS. 2A to 2C) may include the housing 210 and a plurality of cameras 400-1, 400-2, and 400-3 (e.g., the second camera module 280b of FIGS. 2A to 2C, the camera module 380 of FIG. 3 and/or the camera 400 of FIGS. 4 to 12). The plurality of cameras 400-1, 400-2, and 400-3 may include a lens housing (e.g., the lens housing 412) with a shoulder portion (e.g., the shoulder portion 412C) having a reduced height (e.g., the height H1 of FIG. 13). A first distance D1 between the first camera 400-1 and the second camera 400-2 and/or a second distance D2 between the second camera 400-2 and the third camera 400-3 may be reduced. A thickness (e.g., a dimension in a +/-Z direction) of the housing 210 may be reduced.

An aspect of the disclosure may provide a camera applicable to various types of electronic devices.

In an embodiment, the cameras 180, 280a and 280b, 380, and 400 may include the plurality of lenses 411 arranged in an OA direction. The cameras 180, 280a and 280b, 380, and 400 may include the lens housing 412 configured to accommodate the plurality of lenses 411. The cameras 180, 280a and 280b, 380, and 400 may include the image sensor 430 including the imaging area 431. The imaging area 431 may include the first periphery 431A having a first length and the second periphery 431B having a second length greater than the first length. The plurality of lenses 411 may include the effective regions A11 and A21 through which light passes and the non-effective regions A12 and A22 through which light does not pass, respectively. Among the plurality of lenses 411, the first lens 413 may include the first protrusion 413B protruding in the OA direction. The first protrusion 413B may form at least a portion of the non-effective region A12. The first protrusion 413B may be configured to face the non-effective region A22 of the second lens 414 adjacent to the first lens 413 in the OA direction among the plurality of lenses 411.

In an embodiment, the first protrusion 413B may be disposed in a direction parallel to a first edge-wise direction of the imaging area 431.

In an embodiment, the first protrusion 413B may not be disposed in a direction parallel to a second edge-wise direction of the imaging area 431.

In an embodiment, the first protrusion 413B may include the first surface F11 facing the non-effective region A22 of the second lens 414, the second surface F12 opposite to the first surface F11, and the side surfaces F13, F14, and F15 between the first surface F11 and the second surface F12. At least a portion of the side surfaces F13, F14, and F15 may include the inclined surfaces F14 and F15.

In an embodiment, the first protrusion 413B may extend at least partially along the circumference of the effective region A11.

In an embodiment, the cameras 180, 280a and 280b, 380, and 400 may include the first mask 415 disposed between the first projection 413B and the non-effective region A22 of the second lens 414.

In an embodiment, the first protrusion 413B may include the light absorbing layer 417 disposed on the surface F11 facing the non-effective region A22 of the second lens 414.

In an embodiment, the first lens 413 may include the first flange 413A forming at least a portion of the non-effective region A12 of the first lens 413.

In an embodiment, the cameras 180, 280a and 280b, 380, and 400 may include the second mask 416 disposed on the first flange 413A.

In an embodiment, the second lens 414 may include the second flange 414A forming at least a portion of the non-effective region A22 of the second lens 414.

In an embodiment, the first lens 413 may include the second protrusion 413C protruding in the OA direction. The second protrusion 413C may form at least a portion of the non-effective region A12. The second protrusion 413C may be configured to face the non-effective region A22 of the second lens 414.

In an embodiment, the second protrusion 413C may be disposed opposite to the first protrusion 413B in a direction parallel to the first edge-wise direction of the imaging area 431.

In an embodiment, the second protrusion 413C may not be disposed in a direction parallel to a second edge-wise direction of the imaging area 431.

In an embodiment, a size of the imaging area 431 may be substantially equal to or smaller than a size of the effective region A11 of the first lens 413.

In an embodiment, the lens housing 412 may include the first body portion 412A surrounding the first lens 413 and having a first outside diameter. The lens housing 412 may include the second body portion 412B surrounding the second lens 414 and having a second outside diameter smaller than the first outside diameter. The lens housing 412 may include the shoulder portion 412C between the first body portion 412A and the second body portion 412B. A distance between the image sensor 430 and the shoulder portion 412C may be substantially equal to or smaller than a distance between the image sensor 430 and the second lens 414.

In an embodiment, a size of the effective region A11 of the first lens 413 may be substantially equal to or greater than a size of the effective region A21 of the second lens 414.

In an embodiment, the electronic devices 101, 201, and 201-1 may include the housing 210 including the first surface 210a and the second surface 210b opposite to the first surface 210a. The electronic devices 101, 201, and 201-1 may include the display 261 disposed on the first surface 210A. The electronic devices 101, 201, and 201-1 may include the cameras 280a and 400 disposed on the first surface 210a.

In an embodiment, the lens housing 412 may be disposed so as not to contact the display 261.

In an embodiment, the display 261 may be disposed at least partially over the lens housing 412.

In an embodiment, the electronic devices 101, 201, and 201-2 may include the housing 210 including the first surface 210a and the second surface 210b opposite to the first surface 210a. The electronic devices 101, 201, and 201-2 may include a plurality of cameras 280b and 400 disposed on the second surface 210b.

According to an embodiment, a camera applicable to an electronic device may be provided regardless of the type of display. According to an embodiment, a camera applicable to an electronic device may be provided regardless of the design of the electronic device.

According to an embodiment, a camera having a reduced weight may be provided. According to an embodiment, the driving force of a camera may be improved.

The effects of an electronic device according to embodiments are not limited to the above-mentioned effects, and other unmentioned effects can be clearly understood from the description of the specification by one of ordinary skill in the art.

The embodiments of the disclosure are intended to be illustrative and not restrictive. Various modifications may be made to the detailed description of the disclosure including the accompanying scope of claims and equivalents. Any of the embodiment(s) described herein may be used in combination with any other embodiment(s) described herein.

## Claims

1. A camera (180; 280a, 280b; 380; 400) comprising:
a plurality of lenses (411) arranged in an optical axis direction;
a lens housing (412) configured to accommodate the plurality of lenses (411); and
an image sensor (430) comprising an imaging area (431), the imaging area (431) comprising a first periphery (431A) having a first length and a second periphery (431B) having a second length greater than the first length,
wherein the plurality of lenses (411) comprises effective regions (A11, A21) through which light passes and non-effective regions (A12, A22) through which the light does not pass, respectively, and
among the plurality of lenses (411), a first lens (413) comprises a first protrusion (413B) protruding in the optical axis direction, and
the first protrusion (413B) is configured to form at least a portion of the non-effective region (A12), and
the first protrusion (413B) is configured to face the non-effective region (A22) of a second lens (414) adjacent to the first lens (413) in the optical axis direction among the plurality of lenses (411).

2. The camera of claim 1, wherein
the first protrusion (413B) is disposed in a direction parallel to a first edge-wise direction of the imaging area (431), and/or
the first protrusion (413B) is not disposed in a direction parallel to a second edge-wise direction of the imaging area (431).

3. The camera of claim 1 or 2, wherein
the first protrusion (413B) comprises:
a first surface (F11) facing the non-effective region (A22) of the second lens (414);
a second surface (F12) opposite to the first surface (F11); and
side surfaces (F13, F14, F15) between the first surface (F11) and the second surface (F12),
at least a portion of the side surfaces (F13, F14, F15) comprising inclined surfaces (F14, F15), and
preferably, the first protrusion (413B) extending at least partially along a circumference of the effective region (A11).

4. The camera of any one of claims 1 to 3, further comprising:
a first mask (415) disposed between the first projection (413B) and the non-effective region (A22) of the second lens (414).

5. The camera of any one of claims 1 to 4, further comprising:
a light absorbing layer (417) disposed on a surface (F11) facing the non-effective region (A22) of the second lens (414).

6. The camera of any one of claims 1 to 5, wherein
the first lens (413) further comprises a first flange (413A) forming at least a portion of the non-effective region (A12) of the first lens (413), and
preferably, the camera further comprises a second mask (416) disposed on the first flange (413A), and
preferably, the second lens (414) further comprises a second flange (414A) forming at least a portion of the non-effective region (A22) of the second lens (414).

7. The camera of any one of claims 1 to 6, wherein
the first lens (413) further comprises a second protrusion (413C) protruding in the optical axis direction, and
the second protrusion (413C) forms at least a portion of the non-effective region (A12), and
the second protrusion (413C) is configured to face the non-effective region (A22) of the second lens (414).

8. The camera of any one of claims 1 to 7, wherein
the second protrusion (413C) is disposed opposite to the first protrusion (413B) in a direction parallel to the first edge-wise direction of the imaging area (431), and/or
the second protrusion (413C) is not disposed in a direction parallel to the second edge-wise direction of the imaging area (431).

9. The camera of any one of claims 1 to 8, wherein
a size of the imaging area (431) is substantially equal to or smaller than a size of the effective region (A11) of the first lens (413).

10. The camera of any one of claims 1 to 9, wherein
the lens housing (412) comprises:
a first body portion (412A) surrounding the first lens (413) and having a first outside diameter;
a second body portion (412B) surrounding the second lens (414) and having a second outside diameter smaller than the first outside diameter; and
a shoulder portion (412C) between the first body portion (412A) and the second body portion (412B), and
a distance between the image sensor (430) and the shoulder portion (412C) is substantially equal to or smaller than a distance between the image sensor (430) and the second lens (414).

11. The camera of any one of claims 1 to 10, wherein
a size of the effective region (A11) of the first lens (413) is substantially equal to or greater than a size of the effective region (A21) of the second lens (414).

12. An electronic device (101; 201; 201-1) comprising:
a housing (210) comprising a first surface (210a) and a second surface (210b) opposite to the first surface (210a);
a display (261) disposed on the first surface (210a); and
a camera (280a; 400) according to any one of claims 1 to 11 disposed on the first surface (210a).

13. The electronic device of claim 12, wherein
the lens housing (412) is disposed so as not to contact the display (261).

14. The electronic device of claim 12 or 13, wherein
the display (261) is disposed at least partially over the lens housing (412).

15. An electronic device (101; 201; 201-2) comprising:
a housing (210) comprising a first surface (210a) and a second surface (210b) opposite to the first surface (210a); and
a plurality of cameras (280b, 400) according to any one of claims 1 to 14 disposed on the second surface (210b).
